# EUROPEAN PATENT APPLICATION

(11) **EP 4 092 849 A1**
(43) Date of publication of application: **23.11.2022**
(21) Application number: 21174326.5
(22) Date of filing: 18.05.2021
(51) Int. Cl.: H02B 11/127

(54) **MODULE ASSEMBLY**

(71) Applicant: ABB Schweiz AG, 5400 Baden (CH)
(72) Inventor: Nygren, Toni, 00380 Helsinki (FI); Koskinen, Matti, 00380 Helsinki (FI); Puukko, Joonas, 00380 Helsinki (FI)
(74) Representative: Kolster Oy Ab

(57) **Abstract**

A module assembly comprising a device module (2) and a frame structure (4). The device module (2) is adapted to be connected in a connecting event to an operative position relative to the frame structure (4). The module assembly comprises a guide system for guiding the device module (2) relative to the frame structure (4) during the connecting event, the guide system comprises a first guide member (61) rotatably mounted to the device module (2), and a second guide member (62) provided in the frame structure (4). The guide system comprises a first thread (16) on the first guide member (61), and a second thread (26) on the second guide member (62).

## Description

### FIELD OF THE INVENTION

The invention relates to a module assembly.

A known module assembly comprises a frame structure having a frame side connector system, and a device module having a module side connector system. The device module is adapted to be connected in a connecting event to an operative position relative to the frame. In the operative position the module side connector system is electrically connected to the frame side connector system.

In the known module assembly, the module side connector system and the frame side connector system are adapted to co-operate as knife connector systems, and the connecting event is realized by pushing the device module towards the frame structure. During the connecting event, interaction between the module side connector system and frame side connector system resists relative movement between the device module and the frame structure by a resisting force caused, inter alia, by friction between the module side connector system and frame side connector system.

One of the problems associated with the above known module assembly is that depending on properties of the module assembly, such as rated current of the module assembly, the resisting force may be relatively high, wherein pushing the device module into the operative position requires considerable strength. Further, if alignment between the device module and the frame structure is not correct, pushing the device module towards the frame structure with great force and velocity may damage the module side connector system and/or the frame side connector system.

### BRIEF DESCRIPTION OF THE INVENTION

An object of the present invention is to provide a module assembly so as to solve the above problems. The objects of the invention are achieved by a module assembly which is characterized by what is stated in the independent claim. The preferred embodiments of the invention are disclosed in the dependent claims.

The invention is based on the idea of providing the module assembly with a guide system for guiding the device module relative to the frame structure during the connecting event. The guide system comprises a first guide member having a first thread, and a second guide member having a second thread, wherein the first guide member is rotatably mounted to the device module, and the second guide member is provided in the frame structure such that the first thread is adapted to co-operate with the second thread during the connecting event.

An advantage of the module assembly of the invention is that realizing the connecting event requires only little strength since the device module can be moved to the operative position by rotating the first guide member. Also, the guide system is adapted to align the device module relative to the frame structure during the connecting event so the risk of damaging the module side connector system or the frame side connector system is eliminated.

### BRIEF DESCRIPTION OF THE DRAWINGS

In the following the invention will be described in greater detail by means of preferred embodiments with reference to the attached drawings, in which
Figure 1 shows a module assembly according to an embodiment of the invention in a situation where a device module is in a disconnected position relative to a frame structure;
Figure 2 shows the module assembly of Figure 1 in a situation where the device module is in an operative position relative to the frame structure;
Figure 3 shows a side view of the module assembly of Figure 1 in a situation where the device module is in an intermediate position between the disconnected position shown in Figure 1 and the operative position shown in Figure 2;
Figure 4 shows a side view of the module assembly of Figure 1 in a situation where the device module is in the operative position relative to the frame structure;
Figure 5 shows a first guide member of the module assembly of Figure 1 as a cross section, together with a portion of a heat sink inside which the first guide member partially extends; and
Figure 6 shows the first guide member of Figure 5 as a separate component.

### DETAILED DESCRIPTION OF THE INVENTION

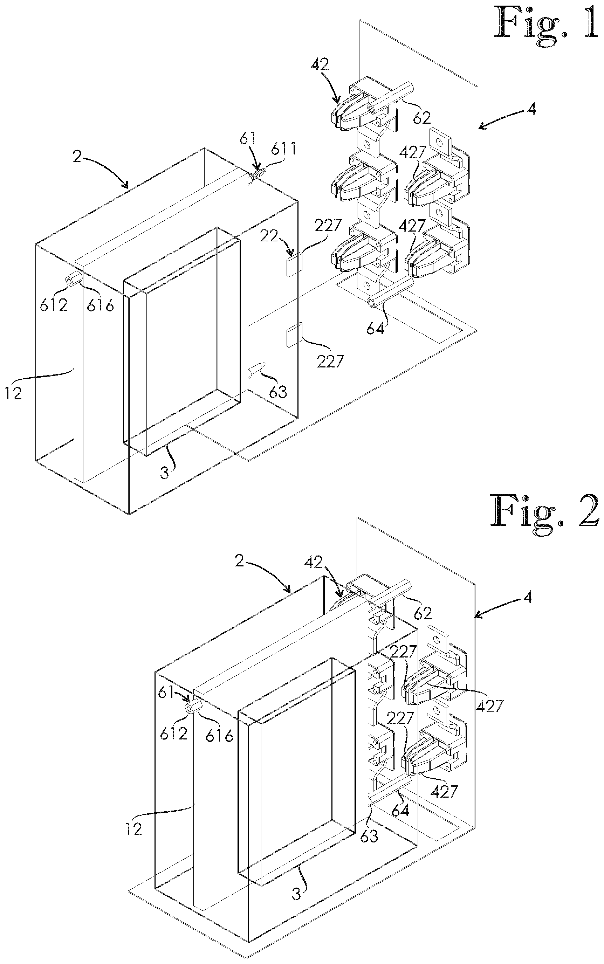

Figure 1 shows a module assembly comprising a device module 2, a frame structure 4, and a guide system. The device module 2 comprises an electrical device 3, a module side connector system 22, and a heat sink 12. The frame structure 4 comprises a frame side connector system 42. An outer casing of the device module 2 is depicted as a transparent structure in order to better show components inside the outer casing. In Figure 1, the device module 2 is in a disconnected position relative to the frame structure 4.

The device module 2 is adapted to be connected in a connecting event to an operative position relative to the frame structure 4. During the connecting event, a relative movement between the device module 2 and the frame structure 4 is linear, and parallel to a depth direction of the module assembly.

The module side connector system 22 comprises five module side connectors 227, and the frame side connector system 42 comprises five frame side connectors 427. Each of the module side connectors 227 is electrically conductively connected to the electrical device 3. This electrically conductive connection is not shown in the Figures.

In the operative position the module side connector system 22 is electrically conductively connected to the frame side connector system 42. In the operative position, the electrical device 3 is electrically conductively connected to the frame side connectors 427 through the module side connector system 22.

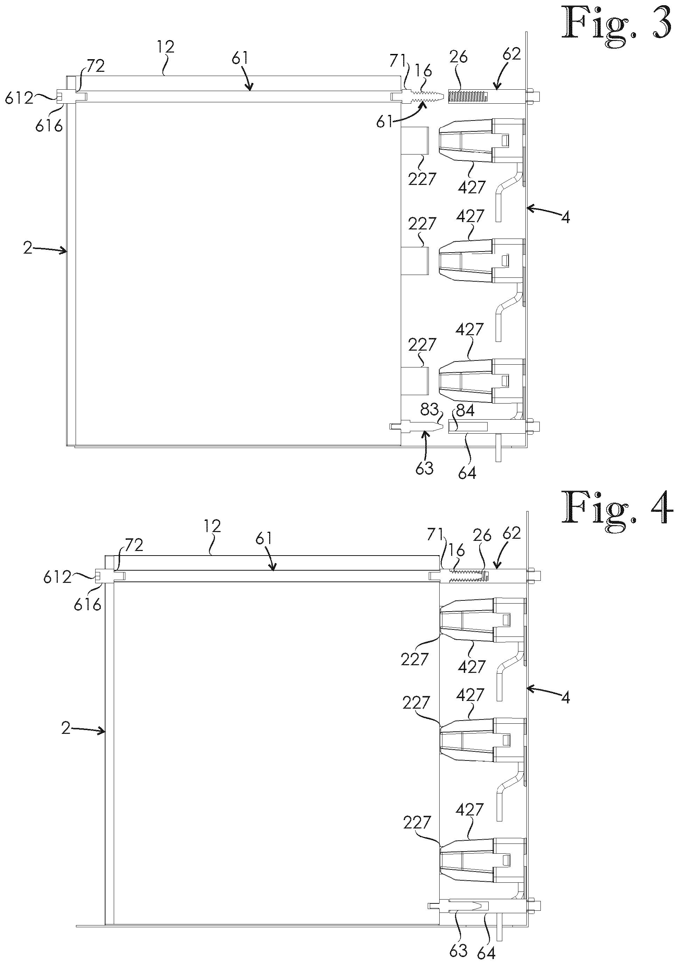

Figures 2 and 4 show the module assembly in a situation where the device module 2 is in the operative position relative to the frame structure 4. Figure 3 shows a side view of the module assembly in a situation where the device module 2 is in an intermediate position between the disconnected position shown in Figure 1 and the operative position shown in Figures 2 and 4. In Figures 3 and 4, the module assembly is shown from side as a cross section in order to better depict operation of the guide system. In Figures 3 and 4, the depth direction of the module assembly is a horizontal direction.

The guide system is adapted for guiding the device module 2 relative to the frame structure 4 during the connecting event. The guide system is electrically isolated from the module side connector system 22 and frame side connector system 42. The guide system comprises a first guide member 61 rotatably mounted to the device module 2, and a second guide member 62 provided in the frame structure 4 such that the first guide member 61 is adapted to co-operate with the second guide member 62 for guiding the device module 2 during the connecting event.

The electrical device 3 comprises a frequency converter. The heat sink 12 is adapted for cooling the electrical device 3. The heat sink 12 is in heat conductive connection with the electrical device 3. The first guide member 61 extends partially inside the heat sink 12. In Figures 1 and 2, the electrical device 3 and the heat sink 12 are shown simply as rectangular parallelepipeds.

In an alternative embodiment, the electrical device comprises an LCL filter. In a further embodiment, the device module does not comprise heat sink.

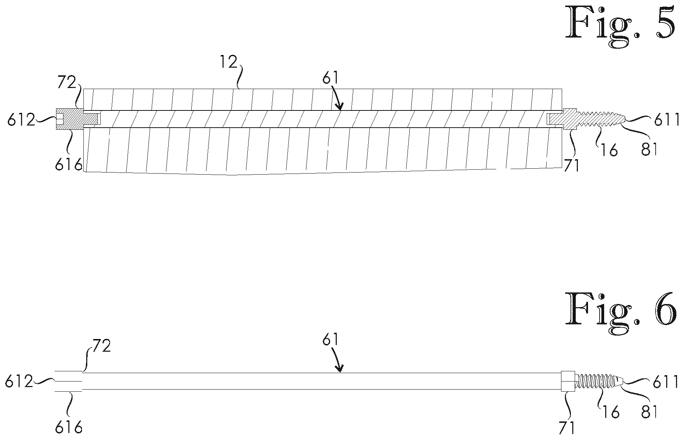

Figure 5 shows the first guide member 61 as a cross section, together with a portion of the heat sink 12 inside which the first guide member 61 partially extends. Figure 6 shows the first guide member 61 as a separate component.

The first guide member 61 has a first end 611 and a second end 612 such that during the connecting event the first end 611 leads and the second end 612 follows. The guide system comprises a first thread 16 on the first guide member 61, and a second thread 26 on the second guide member 62. The first thread 16 is an external thread, and the second thread 26 is an internal thread. The first thread 16 is adapted to co-operate with the second thread 26 during the connecting event.

Due to the first thread 16 and the second thread 26, the guide system also provides mechanical connection between the device module 2 and the frame structure 4, thereby reducing need for additional mechanical connections between them. However, in alternative embodiments there are additional mechanical connections, such as screw connections, between the device module and the frame structure.

The first guide member 61 comprises an actuation head 616 for turning the first guide member 61. The actuation head 616 is located at the second end 612 of the first guide member 61. The actuation head 616 is adapted to be turned both by a hex key and a wrench. In an alternative embodiment, the actuation head is adapted to be turned manually without any tool.

There is a module side tapered section 81 formed in the first guide member 61. The module side tapered section 81 is a convex section, and is located closer to the first end 611 of the first guide member 61 than the first thread 16. The module side tapered section 81 is adapted to enter the second thread 26 during the connecting event for facilitating alignment between the first guide member 61 and the second guide member 62.

In an alternative embodiment, there is a frame side tapered section formed in the second guide member, the frame side tapered section being adapted to facilitate alignment between the first guide member and the second guide member during the connecting event. In a further alternative embodiment, the first thread formed on the first guide member is an internal thread, and the second thread formed on the second guide member is an external thread.

The module side connector system 22 and the frame side connector system 42 are adapted to co-operate as knife connector systems such that in the operative position of the device module 2, normals of contact surfaces of the module side connector system 22 and the frame side connector system 42 are generally in a direction perpendicular to the depth direction of the module assembly. Forming the connector systems as knife connector systems enables connecting the device module into the operative position relative to the frame structure simply by pushing the device module towards the frame structure. Further, a knife connector systems generally provides a more reliable electrical contact than a bumper connector system, for example.

The module assembly comprises a stop system adapted to prevent detaching of the first guide member 61 from the device module 2 in forward direction and backward direction. The forward direction and backward direction are opposite directions relative to each other, and parallel to a rotation axis of the first guide member 61. The forward direction is a direction from the second end 612 towards the first end 611, and the backward direction is a direction from the first end 611 towards the second end 612. In alternative embodiments the module assembly comprises a stop system adapted to prevent detaching of the first guide member from the device module in forward direction or in backward direction.

The stop system comprises a first stop member 71 and a second stop member 72. The first stop member 71 is located close to the first end 611 of the first guide member 61, and the second stop member 72 is located close to the second end 612 of the first guide member 61. The heat sink 12 comprises an elongated hole through which the first guide member 61 extends, and in which the first guide member 61 is adapted to rotate relative to the heat sink 12. In a direction perpendicular to the rotation axis of the first guide member 61, dimensions of the first stop member 71 and the second stop member 72 are greater than a diameter of the elongated hole in the heat sink 12.

During the connecting event, interaction between the module side connector system 22 and frame side connector system 42 resists a relative movement between the device module 2 and the frame structure 4 by a resisting force that has a maximum value during the connecting event. The resisting force is generated, inter alia, by friction between the module side connector system 22 and frame side connector system 42.

Figure 3 shows that during the connecting event the first thread 16 and the second thread 26 are adapted to contact before the module side connector system 22 contacts the frame side connector system 42. In an alternative embodiment, during the connecting event the first thread and the second thread are adapted to contact before the resisting force reaches 50% of the maximum value thereof. Consequently, force required for pushing the device module towards the frame structure for accomplishing the operative position is reduced since after the first thread and the second thread contact, the device module can be moved by turning the actuation head, which requires only little torque. Also, force required for detaching the device module from the frame structure is reduced since in a beginning of the detaching the device module is moved away from the frame structure by turning the actuation head in an opposite direction compared to the direction in which the actuation head is turned during the connecting event.

In addition to the first guide member 61 and the second guide member 62, the guide system comprises a third guide member 63 provided in the device module 2, and a fourth guide member 64 provided in the frame structure 4. The third guide member 63 is adapted to co-operate with the fourth guide member 64 for guiding the device module 2 during the connecting event. The third guide member 63 is spaced apart from the first guide member 61 in a direction perpendicular to the rotation axis of the first guide member 61, and the fourth guide member 64 is spaced apart from the second guide member 62.

There is a module side tapered section 83 formed in the third guide member 63, and a guide recess 84 formed in the fourth guide member 64. The guide recess 84 is adapted to receive the third guide member 63. Neither the third guide member 63 nor the fourth guide member 64 comprises a thread.

It will be obvious to a person skilled in the art that the inventive concept can be implemented in various ways. The invention and its embodiments are not limited to the examples described above but may vary within the scope of the claims.

## Claims

1. A module assembly comprising:
a device module (2) comprising at least one electrical device (3), and a module side connector system (22);
a frame structure (4) comprising a frame side connector system (42);
wherein the device module (2) is adapted to be connected in a connecting event to an operative position relative to the frame structure (4), and in the operative position the module side connector system (22) is electrically conductively connected to the frame side connector system (42),
**characterized in that** the module assembly comprises a guide system for guiding the device module (2) relative to the frame structure (4) during the connecting event, the guide system comprises a first guide member (61) rotatably mounted to the device module (2), and a second guide member (62) provided in the frame structure (4) such that the first guide member (61) is adapted to co-operate with the second guide member (62) for guiding the device module (2) during the connecting event,
the first guide member (61) has a first end (611) and a second end (612) such that during the connecting event the first end (611) leads and the second end (612) follows, and
the guide system comprises a first thread (16) on the first guide member (61), and a second thread (26) on the second guide member (62), and the first thread (16) is adapted to co-operate with the second thread (26) during the connecting event.

2. A module assembly according to claim 1, wherein the guide system is electrically isolated from the module side connector system (22) and frame side connector system (42).

3. A module assembly according to claim 1 or 2, wherein the first guide member (61) comprises an actuation head (616) for turning the first guide member (61), the actuation head (616) being located at the second end (612) of the first guide member (61).

4. A module assembly according to any one of the preceding claims, wherein the guide system comprises at least one tapered section adapted to facilitate alignment between the first guide member (61) and the second guide member (62) during the connecting event.

5. A module assembly according to claim 4, wherein the at least one tapered section comprises a module side tapered section (81) formed in the first guide member (61) and/or a frame side tapered section formed in the second guide member (62).

6. A module assembly according to claim 5, wherein the at least one tapered section comprises a module side tapered section (81) formed in the first guide member (61), and the module side tapered section (81) is located closer to the first end (611) of the first guide member (61) than the first thread (16).

7. A module assembly according to claim 6, wherein the first thread (16) is an external thread, and the module side tapered section (81) is a convex section.

8. A module assembly as claimed in any one of the preceding claims, wherein a relative movement between the device module (2) and the frame structure (4) is adapted to be linear during the connecting event, wherein the linear relative movement is parallel to a depth direction of the module assembly.

9. A module assembly as claimed in claim 8, wherein the module side connector system (22) and the frame side connector system (42) are adapted to co-operate as knife connector systems such that in the operative position of the device module (2), normals of contact surfaces of the module side connector system (22) and the frame side connector system (42) are generally in a direction perpendicular to the depth direction of the module assembly.

10. A module assembly as claimed in any one of the preceding claims, wherein the module assembly comprises a stop system adapted to prevent detaching of the first guide member (61) from the device module (2) in a forward direction and/or backward direction, the forward direction and backward direction being opposite directions relative to each other, and parallel to a rotation axis of the first guide member (61).

11. A module assembly as claimed in any one of the preceding claims, wherein during the connecting event, interaction between the module side connector system (22) and frame side connector system (42) resists a relative movement between the device module (2) and the frame structure (4) by a resisting force that has a maximum value during the connecting event, and during the connecting event the first thread (16) and the second thread (26) are adapted to contact before the resisting force reaches 50% of the maximum value thereof.

12. A module assembly as claimed in any one of the preceding claims, wherein the device module (2) comprises a heat sink (12) adapted for cooling of the at least one electrical device (3), and the first guide member (61) extends partially inside the heat sink (12).

13. A module assembly as claimed in any one of the preceding claims, wherein the guide system comprises a third guide member (63) provided in the device module (2), and a fourth guide member (64) provided in the frame structure (4) such that the third guide member (63) is adapted to co-operate with the fourth guide member (64) for guiding the device module (2) during the connecting event, wherein the third guide member (63) is spaced apart from the first guide member (61), and the fourth guide member (64) is spaced apart from the second guide member (62).

14. A module assembly according to claim 13, wherein the at least one tapered section of the guide system comprises a module side tapered section (83) formed in the third guide member (63) and/or a frame side tapered section formed in the fourth guide member (64).
